(19) **Europäisches Patentamt**
**European Patent Office**
**Office européen des brevets**

(11) **EP 1 828 288 B1**

(12) **EUROPEAN PATENT SPECIFICATION**

(45) Date of publication and mention
of the grant of the patent:
**10.06.2009 Bulletin 2009/24**

(51) Int Cl.:
**C08J 5/18** (2006.01)

(21) Application number: **05826429.2**

(86) International application number:
**PCT/EP2005/057022**

(22) Date of filing: **21.12.2005**

(87) International publication number:
**WO 2006/067180 (29.06.2006 Gazette 2006/26)**

(54) **GEO-MEMBRANE APPLICATIONS**

GEOMEMBRANANWENDUNGEN

APPLICATIONS DE GÉO-MEMBRANE

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.12.2004 EP 04106830**

(43) Date of publication of application:
**05.09.2007 Bulletin 2007/36**

(73) Proprietor: **TOTAL PETROCHEMICALS RESEARCH FELUY**
**B-7181 Seneffe (Feluy) (BE)**

(72) Inventors:
• **STEPHENNE, Vincent**
**B-1330 Rixensart (BE)**

• **MAZIERS, Eric**
**B-7180 Seneffe (BE)**
• **SLAWINSKI, Martine**
**B-9300 Aalst (BE)**
• **MISERQUE, Olivier**
**B-1435 Mont-saint-guibert (BE)**

(74) Representative: **Leyder, Francis**
**Total Petrochemicals Research Feluy**
**Zone Industrielle C**
**7181 Seneffe (Feluy) (BE)**

(56) References cited:
EP-A- 1 201 713      EP-A- 1 319 685
EP-A- 1 357 151      WO-A-99/10415
WO-A-20/04026921     US-A- 5 736 237
US-A1- 2004 204 547  US-B1- 6 521 306
US-B1- 6 649 698

**Description**

The present invention relates to the field of geo-membranes prepared with bimodal medium density polyethylene resins.

Polyethylene resins prepared with Ziegler-Natta (ZN) catalyst systems are generally used for preparing geo-membrane applications. These resins such as for example Dowlex® 2342M or Stamylan® LL0132H200 have a reasonably high stress crack resistance, tensile properties, impact toughness and good processability, but they leave room for improvement.

Metallocene-prepared resins having a narrow monomodal polydispersity index have also been tested in that field but they have proven to lack the required balance of environmental stress crack and processing properties. In the field of geo-membrane applications stress crack resistance of over 400 h is required simultaneously with good processability. In this description, the polydispersity index D is defined as the ratio Mw/Mn of the weight average molecular weight Mw over the number average molecular weight Mn.

Prior art documents WO99/10415 and US-6521306 disclose rheology modified ethylene polymers. They disclose a process of reacting a poly(sulfonyl azide)with a polymer that comprises the steps of:

a) forming a first admixture of a first amount of a first polymer and a poly(sulfonide azide) in a diluent;
b) forming a second admixture of the admixture of step a) with a second amount of at least one second polymer; and
c) heating the composition of step b) to the decomposition temperature of the coupling agent for a time sufficient to result in coupling of polymer chains.

Prio art document US-6649698 discloses a blend of a high molecular weight high density polyethylene having a bimodal molecular weight distribution and of a linear low density polyethylene preferably prepared with a Ziegler-Natta catalyst system. The polymer components are blended in solution or in thermal processing.

Prior art document EP-1319685 discloses a physical blend comprising a first high molecular weight linear low density polyethylene prepared with a metallocene catalyst system and a second high density polyethylene prepared with a Ziegler-Natta or a chromium-based catalyst system.

Prior art document EP-1357151 discloses the use of a supercritical fluid to improve the homogeneity of heterogeneous bi- or multi-modal resins resulting from a physical or a chemical blend of two or more fractions of the same type of polymer resin, said fractions having very different molecular weights.

There is thus a need to prepare resins that can be used to produce geo-membrane applications.

It is an aim of the present invention to geo-membrane applicatons that have high environmental stress crack resistance.

It is also an aim of the present invention to produce geo-membrane applicatons with a resin that is easy to process by flat sheet extrusion or by blown sheet extrusion.

It is another aim of the present invention to provide geo-membrane applicatons having good tensile properties.

It is a further aim of the present invention to provide geo-membrane applicatons having high impact toughness.

It is yet a further aim of the present invention to provide geo-membranes applications that have good resistance to tear and puncture.

Accordingly, the present invention provides geo-membrane applications produced by flat sheet extrusion or by blown sheet extrusion with a bimodal resin consisting of medium density polyethylene (MDPE).

In this invention, flat sheet extrusion is preferred.

The bimodal MDPE resin is prepared from a chemical blend that results from a single catalyst system used in a double loop reactor wherein the loops are operated under different polymerisation conditions.

The double loop reactor is operated under the following mode:

-    comonomer/hydrogen split wherein a high molecular weight and high comonomer concentration is produced in one reactor and a low molecular weight, low comonomer concentratrion is produced in the second reactor. In the direct configuration, the high comonomer concentration is produced in the first reactor and vice versa, in the inverse configuration, the low comonomer concentration is produced in the first reactor.

Preferably, the bimodal MDPE resin is prepared with a catalyst system based on a bridged bisindenyl metallocene catalyst component. The catalyst component is of general formula I

$$R'' (Ind)_2 MQ_2 \qquad (I)$$

wherein (Ind) is an indenyl or an hydrogenated indenyl, substituted or unsubstituted, R'' is a structural bridge between the two indenyls to impart stereorigidity that comprises a $C_1$-$C_4$ alkylene radical, a dialkyl germanium or silicon or siloxane, or a alkyl phosphine or amine radical, which bridge is substituted or unsubstituted; Q is a hydrocarbyl radical having from 1 to 20 carbon atoms or a halogen, and M is a transition metal Group 4 of the Periodic Table or vanadium.

Each indenyl or hydrogenated indenyl compound may be substituted in the same way or differently from one another at one or more positions in the cyclopentadienyl ring or in the cyclohexenyl ring and the bridge.

Each substituent on the indenyl may be independently chosen from those of formula $XR_v$ in which X is chosen from Group 14 of the Periodic Table, oxygen and nitrogen and each R is the same or different and chosen from hydrogen or hydrocarbyl of from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring preferably have R as hydrogen or $CH_3$. More preferably, at least one and most preferably both cyclopentadienyl rings are unsubstituted.

In a particularly preferred embodiment, both indenyls are unsubstituted, and most preferably they are unsubstituted hydrogenated indenyls.

The most preferred metallocene catalyst component is isopropylidene-bis-tetrahydroindenyl zirconium dichloride.

The active catalyst system used for polymerising ethylene comprises the above-described catalyst component and a suitable activating agent having an ionising action.

Suitable activating agents are well known in the art.: they include aluminium alkyls aluminoxane or boron-based compounds.

Optionally, the catalyst component can be supported on a support.

This metallocene catalyst system is preferably used in a liquid full double loop reactor wherein the loops are operated under different conditions in order to produce a bimodal resin. The double loop reactor can be operated either in direct configuration wherein the copolymer is prepared in the first reactor or in inverse configuration wherein the homopolymer is prepared in the first reactor.

The bimodal resins of the present invention have a polydispersity index that is preferably larger than 3, more preferably from 3.1 to 3.5. The molecular weights are determined by GPC-DRI. In solution, long-branched polymers assume a more compact configuration than linear chains and their molecular weight can thus be slightly underestimated. The density is preferably of from 0.925 to 0.945 g/cm$^3$, preferably of from 0.934 to 0.938 g/cm$^3$ and the melt flow indices MI2 and HLMI are respectively ranging from 0.1 to 2 dg/min, preferably of from 0.5 to 1 dg/min and of from 5 to 30 dg/min.

The density is measured following the method of standard test ASTM 1505 at a temperature of 23 °C. The melt flow indices MI2 and HLMI are measured following the method of standard test ASTM D 1238 at a temperature of 190 °C and respectively under a load of 2.16 kg and 21.6 kg.

The methods used to prepare geo-membranes are either flat sheet extrusion or blown sheet extrusion. In both methods, the heart of the process is the extruder. Pellets are fed into the extruder typically by a screw system, they are then heated, placed under pressure and formed into a hot plastic mass before reaching the die. Once the components are in the hot plastic state, they can be formed either into a flat sheet by a dove tail die or into a cylindrical sheet that is subsequently cut and folded out into a flat sheet.

In the flat sheet extrusion process, the hot plastic mass is fed into a dove tail die and exits through a horizontal straight slit. Depending upon the width of the die, one or more extruders may be needed to feed the hot plastic mass into the die. High quality metal ollers placed in front of the slit are used to control the thickness and surface quality of the sheets. These rollers must be able to sustain pressure and temperature variations without deformation and they are connected to cooling liquids. The rollers are designed in order to control the sheet thickness to less than 3% variation over the whole width. A third roller may be used to further cool the sheet and to improve its surface finish. The surface finish of the sheet is directly proportional to the quality of the rollers' surface. The evenly cooled finished material is then fed over support rollers to be wrapped onto a core pipe and rolled up.

In the blown extrusion process the hot plastic mass is fed into a slowly rotating spiral die to produce a cylindrical sheet. Cooled air is blown into the centre of the cylinder creating a pressure sufficient to prevent its collapsing. The cylinder of sheeting is fed up vertically: it is then closed by being flattened over a series of rollers. After the cylinder is folded together, the sheet is cut and opened up to form a flat surface and then rolled up. The annular slit through which the cylinder sheet is formed is adjusted to control the sheet's thickness. Automatic thickness control is available in modern plants. Cooling is performed by the cool air blown into the centre of the cylinder and then during the rolling up process.

Coextrusion allows the combination of different materials into a single multi-layer sheet.

## List of Figures.

Figure 1 represents the molecular weight distribution of the resins tested.

Figure 2 represents the complex viscosity expressed in Pas as a function of frequency expressed in rad/s for several resins.

**Examples.**

Several resins have been tested in the production of geo-membrane applications. drinks.

They were selected as follows.

Resins R1 and R2 are monomodal medium density polyethylene (MDPE) resins prepared with isopropylidene-bis(tetrahydroindenyl) zirconium dichloride.

Resins R3 and R4 are bimodal MDPE resins prepared with isopropylidene-bis(tetrahydroindenyl) zirconium dichloride (THI) in a double loop reactor in direct configuration, i.e. wherein comonomer hexene is introduced into the first reactor and hydrogen is introduced into the second reactor.

Resin R5 is a Ziegler-Natta HDPE sold by Dow under the name Dowlex® 2342 M.

Resin R6 is a Ziegler-Natta HDPE sold by DSM under the name Stamylan® LL0132H200.

Their properties are summarised in Table I.

**TABLE I.**

| Resin | Density g/cm$^3$ | MI2 dg/min | HLMI dg/min | Mn kDa | Mw kDa | D |
|-------|-----------------|------------|-------------|--------|--------|-----|
| R1 | 0.934 | 0.9 | 25 | 32.1 | 74.9 | 2.6 |
| R2 | 0.933 | 0.2 | 10 | 41.2 | 106.3 | 2.6 |
| R3 | 0.934 | 0.4 | 19 | 30.8 | 93.7 | 3.0 |
| R4 | 0.934 | 0.5 | 20 | 27.7 | 96.4 | 3.5 |
| R5 | 0.937 | 0.89 | 24 | 24.6 | 115.7 | 4.7 |
| R6 | 0.935 | 0.74 | 20 | 28.3 | 117.5 | 4.2 |

For the bimodal polyethylene resins according to the present invention, different products were obtained in reactors Rx1 and Rx2 of the double loop system.

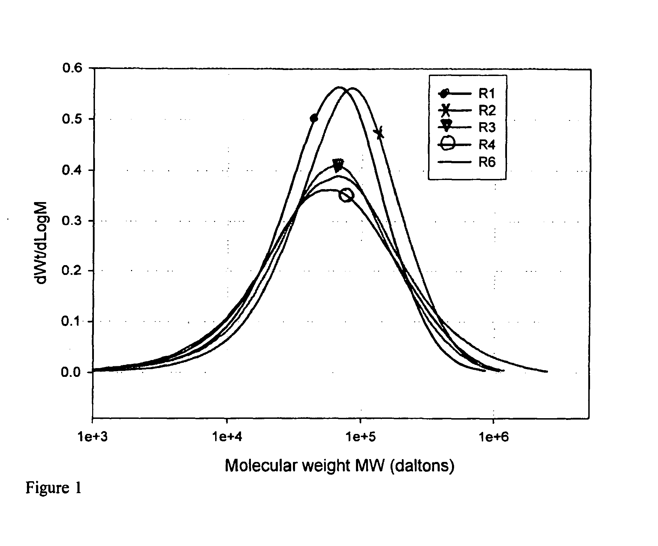

The curves representing the molecular weight distribution for all resins are represented in Figure 1. As expected, the molecular weight distribution of all the resins prepared with a Ziegler-Natta catalyst system are significantly broader than those of all the metallocene-prepared resins. In addition, they include very long chains that are characterised by a high molecular weight fraction above $10^6$ daltons. The metallocene-prepared resins, both monomodal and bimodal do not contain very long chains.

The molecular architecture of the resins has also been investigated and the amount of short chain branching and long chain branching has been evaluated for each resin.

The short chain branching (SCB) content was measured by NMR. The results for all resins are displayed in Table III as well as the nature of the short branches.

The long chain branching content was determined by the long chain branching index (LCBI). The method is described by Schroff R.N. and Mavridis H. in Macromolecules, 32, 8454 (1999) and LCBI is given by empirical formula

$$LCBI = \eta_0^{0.288} / 1.88 * [\eta] - 1$$

wherein $\eta_0$ is the zero shear viscosity expressed in Pa.s and $[\eta]$ is the intrinsic viscosity in solution expressed in g/mol. This method is more sensitive than the usual Dow Rheological Index (DRI) or NMR methods and is independent of the polydispersity. It was developed for substantially linear polyethylene such as typically obtained in metallocene catalysis and it only requires the measurement of intrinsic viscosity of a dilute polymer solution and the zero shear viscosity. It is equal to zero for linear chains and deviates from zero when long chain branching (LCB) is present. The intrinsic viscosity values were calculated from the Mark-Houwink relationship that was developed for linear chains and it must be noted that this method only applies to resins having a small content of long chain branching. The zero shear viscosity was obtained by Carreau-Yasada fitting. The results are displayed in Table II and they show that the resins prepared with Ziegler-Natta catalyst systems have no long chain branching and that the bimodal metallocene-prepared resins have the highest level of long chain branching.

**TABLE II.**

| Resin | Nature SCB | SCB content wt% | LCBI |
|---|---|---|---|
| R1 | butyl | 2.3 | 1.0 |
| R2 | butyl | 1.7 | >5 |
| R3 | butyl | 2.3 | 3.1 |
| R4 | butyl | 1.8 | 3.4 |
| R5 | hexyl | - | 0 |
| R6 | butyl | 3.5 | 0 |

It must be noted that for the bimodal resins according to the present invention that are prepared in a double loop reactor, the fluff exiting the first reactor had a higher content of long chain branching than the global product.

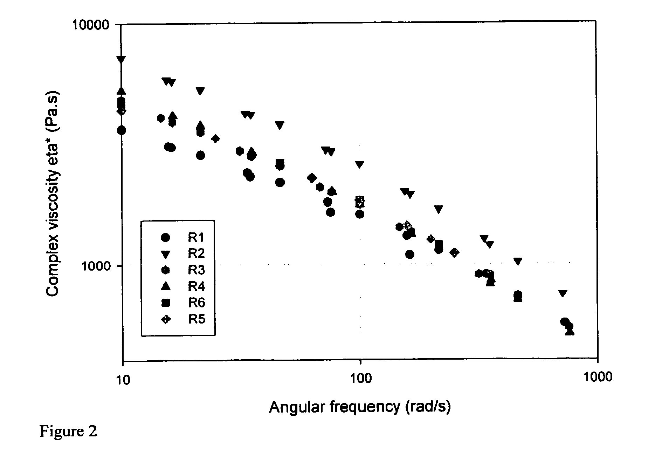

The complex viscosity curves as a function of angular frequency are presented in Figure 2. The viscosity curves were analysed with a laboratory-scale rheometre at the end of the extruder. The bimodal polyethylene resins of the present invention were characterised by a higher zero-shear viscosity than the Ziegler-Natta polyethylene (ZNPE) resins or the mono modal mPE because of the presence of LCB. At high angular frequencies, the viscosity curves for all resins were very similar, implying similar outputs at the end of the extruder as seen in Figure 2.

The processability of resin R3 according to the present invention was also tested in a flat sheet extrusion process under two different processing conditions.

A. Preparation of sheets having a thickness of 1.5 mm with resins R1 to R3.

Temperature profile: 200/210/220/230/230 °C

Apparent shear rate of about 100 s-1

Rollers temperature: 60 °C

Stretching rate: 1.33

Targeted output rate: 95 kg/h

The real output rates Q are reported in Table III. It can be observed that output target was reached for resins R1 and R3, but not for resin R2 characterised by a higher viscosity than resins R1 and R3 as seen in Figure 2. The thickness control and surface smoothness were excellent for resin r3 according to the present invention.

B. Preparation of sheets having a thickness of 2.5 mm with resin R3.

Temperature profile: 230/230/230/230/230 °C

Apparent shear rate of about 100 s-1

Rollers temperature: 70 °C

Stretching rate: 1.12

Targeted and real output rate: 145 kg/h.

**TABLE III.**

| Resin | R1 | R2 | R3 |
|---|---|---|---|
| Q (kg/h) | 95 | 85 | 95 |
| Melt temperature (°C) | 240 | 244 | 240 |
| Melt pressure (bars) | 157 | 200 | 166 |
| Thickness control | + | + | + |
| Surface smoothness | + | +/- | + |
| ESCR | - | + | + |
| processability | + | - | + |

Mechanical tests routinely performed in the field of geo-membrane applications were carried out on compression moulded specimens.

Stress crack resistance was evaluated following the Single Point Notched Constant Tensile Load (SPNCTL). The test uses a notched dumb-bell-shaped specimen to determine the resistance of material to brittle fractures caused by long-term, low-level tensile stress. The test following the method of standard test ASTM D 5397 requires that the specimens be placed in a surfactant solution, selected here as an Ipegal 10 % solution, at a temperature of 50°C, for an extended period of time, and be subject to a tensile stress equal to 15 % of the material's yield stress. In the field of geo-membrane applications, failure may not occur before at least 400 hours of exposure. Results for the mean failure time are presented in Table IV.

**TABLE IV.**

| Resin | Failure time (h) |
|-------|------------------|
| R1 | 64 |
| R2 | >400 |
| R3 | >1000 |
| R4 | >400 |
| R5 | >400 |
| R6 | >400 |

Bimodal metallocene-prepared polyethylene resins produce a dramatic improvement over the monomodal mPE. They are comparable to and often better than the reference ZNPE generally used in the field. Increasing the molecular weight and the content of small chain branching led to the observed increase in stress crack resistance. Long molecules are more likely to have a high content of tie molecules and a high efficiency in tie molecule entanglement and anchoring in the crystalline lamellae, thereby increasing the stress crack resistance. Incorporation of comonomer also contributes to increasing the content of tie molecule and tie molecule entanglement. In addition, metallocene catalyst systems provide a very homogeneous distribution of short chain branching on the longest molecules.

Tensile properties were evaluated following the method of standard test ASTM D 638 that gives information on the yield strength $\sigma_y$, the elongation at yield $\varepsilon_y$, the break strength $\sigma_B$ and the elongation at break $\varepsilon_B$. The results are presented in Table V together with the Young modulus.

**TABLE V.**

| Resin | $\sigma_y$ (Mpa) | $\varepsilon_y$ (%) | $\sigma_B$ (Mpa) | $\varepsilon_B$ (%) | $E_{Young}$ (Mpa) |
|-------|------|------|------|------|------|
| R1 | 17.0 | 11.5 | 24.0 | 675 | 596 |
| R2 | 17.0 | 12.5 | - | >752 | 563 |
| R3 | 17.0 | 11.5 | 28.0 | 764 | 596 |
| R4 | 18.5 | 11.0 | 20.5 | 655 | 666 |
| R6 | 17.5 | 12.5 | 33.5 | 795 | 573 |

The tensile properties are at least maintained and improved in some cases for the bimodal resins according to the present invention.

**Claims**

1. A process for preparing geo-membrane applications by flat sheet extrusion or by blown sheet extrusion of a bimodal resin consisting of medium density polyethylene (MDPE) having a density of from 0.925 to 0.945 g/cm$^3$ and wherein the MDPE resin is prepared by chemical blending with a single metallocene catalyst system in a double loop reactor wherein the loops are operated under comonomer/hydrogen split configuration wherein a high molecular weight and high comonomer concentration is produced in one reactor and a low molecular weight, low comonomer concentration is produced in the second reactor.

2. The process of claim 1 wherein the metallocene catalyst system is based on a bridged bis-indenyl catalyst component.

3. The process of claim 2 wherein the bridged bis-indenyl catalyst component is a bis-tetrahydro-indenyl catalyst component.

4. Geo-membranes obtained by the process of any one of claims 1 to 3.

5. Use of a bimodal resin consisting of a medium density polyethylene having high molecular weight, a density of from 0925 to 0.945 g/cm$^3$, short and long chain brainching, and prepared by chemical blending with a single metallocene catalyst system based on a bridged bis-indenyl catalyst component, in a double loop reactor, wherein the loops are operated under comonomer/hydrogen split configuration wherein a high molecular weight and high comonomer concentration is produced in one reactor and a low molecular weight, low comonomer concentration is produced in the second reactor, in order to prepare geo-membrane applications.

**Patentansprüche**

1. Verfahren zur Herstellung von Geomembrananwendungen durch Schlitzpressextrusion oder Blasfolienextrusion eines bimodalen Harzes, das aus Polyethylen mittlerer Dichte (MDPE) mit einer Dichte von 0,925 bis 0,945 g/cm$^3$ besteht, und wobei das MDPE-Harz durch chemisches Mischen mit einem Einzelmetallocenkatalysatorsystem in einem Doppelschlaufenreaktor hergestellt wird, wobei die Schlaufen unter geteilter Comonomer-Wasserstoff-Konfiguration betrieben werden, wobei eine hohe Molmasse und hohe Comonomerkonzentration in einem Reaktor produziert wird und eine niedrige Molmasse, niedrige Comonomerkonzentration in dem zweiten Reaktor produziert wird.

2. Verfahren nach Anspruch 1, wobei das Metallocenkatalysatorsystem auf einer verbrückten Bis-Indenyl-Katalysatorkomponente basiert ist.

3. Verfahren nach Anspruch 2, wobei die verbrückte Bis-Indenyl-Katalysatorkomponente eine Bis-Tetrahydro-Indenyl-Katalysatorkomponente ist.

4. Geomembranen, erhalten durch das Verfahren nach einem der Ansprüche 1 bis 3.

5. Verwendung eines bimodalen Harzes, bestehend aus einem Polyethylen mittlerer Dichte mit hoher Molmasse, einer Dichte von 0,925 bis 0,945 g/cm$^3$, kurz- und langkettiger Verzweigung, und hergestellt durch chemisches Mischen mit einem auf einer verbrückten Bis-Indenyl-Katalysatorkomponente basierten Einzelmetallocenkatalysatorsystem in einem Doppelschlaufenreaktor, wobei die Schlaufen unter geteilter Comonomer-Wasserstoff-Konfiguration betrieben werden, wobei eine hohe Molmasse und hohe Comonomerkonzentration in einem Reaktor produziert wird und eine niedrige Molmasse, niedrige Comonomerkonzentration in dem zweiten Reaktor produziert wird, um Geomembrananwendungen herzustellen.

**Revendications**

1. Procédé pour préparer des applications de géomembranes par extrusion par filière droite plate ou par extrusion par film soufflé d'une résine bimodale constituée d'un polyéthylène de densité moyenne (MDPE) possédant une densité de 0,925 à 0,945 g/cm$^3$ et dans lequel on prépare la résine MDPE par mélange chimique avec un système de catalyseur métallocène unique dans un réacteur à double boucle dans lequel les boucles sont mises en service dans une configuration jumelée comonomère/hydrogène, dans laquelle on produit une concentration élevée de comonomère à poids moléculaire élevé dans un réacteur et on produit une faible concentration de comonomère à bas poids moléculaire dans le deuxième réacteur.

2. Procédé selon la revendication 1, dans lequel le système de catalyseur métallocène se base sur un composant de catalyseur de bis-indényle ponté.

3. Procédé selon la revendication 2, dans lequel le composant de catalyseur de bis-indényle ponté est un composant de catalyseur de bis-tétrahydroindényle.

4. Géomembranes que l'on obtient via le procédé selon l'une quelconque des revendications 1 à 3.

5. Utilisation d'une résine bimodale constituée d'un polyéthylène de densité moyenne possédant un poids moléculaire élevé, une densité de 0,925 à 0,945 g/cm$^3$, une ramification de chaînes courtes et longues, et que l'on prépare par mélange chimique avec un système de catalyseur métallocène unique basé sur un composant de catalyseur de bis-indényle ponté, dans un réacteur à double boucle dans lequel les boucles sont mises en service dans une configuration jumelée comonomère/hydrogène, dans laquelle on produit une concentration élevée de comonomère à poids moléculaire élevé dans un réacteur et on produit une faible concentration de comonomère à bas poids moléculaire dans le deuxième réacteur, dans le but de préparer des applications de géomembranes.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9910415 A
- US 6521306 B
- US 6649698 B
- EP 1319685 A
- EP 1357151 A